# EUROPÄISCHE PATENTSCHRIFT

(11) **EP 2 445 700 B1**
(45) Veröffentlichungstag und Bekanntmachung des Hinweises auf die Patenterteilung: **17.04.2013**
(21) Anmeldenummer: 10730076.6
(22) Anmeldetag: 21.06.2010
(51) Int. Cl.: B29C 51/46, B29C 51/10

(54) **ANALYSEVORRICHTUNG UND VERFAHREN ZUR ANALYSE EINES THERMOFORMPROZESSES IN EINER THERMOFORM-LAMINIERVORRICHTUNG**
APPARATUS AND PROCESS FOR ANALYZING A THERMOFORMING PROCESS IN A THERMOFORMING APPARATUS
APPAREIL ET PROCÉDÉ D'ANALYSE D'UN PROCÉDÉ DE THERMOFORMAGE DANS UNE MACHINE DE THERMOFORMAGE

(30) Priorität: 25.06.2009 DE 102009030656
(43) Veröffentlichungstag der Anmeldung: 02.05.2012
(73) Patentinhaber: Renolit SE, 67547 Worms (DE)
(72) Erfinder: HELD, Lothar, 68623 Lampertheim (DE); HAYER, Sascha, 68647 Biblis (DE)
(74) Vertreter: Wagner, Jutta
(86) Internationale Anmeldenummer: PCT/EP2010/003736
(87) Internationale Veröffentlichungsnummer: WO 2011/006576

(56) Entgegenhaltungen:
- EP-A2- 0 374 735
- DE-A1-102008 038 080

## Beschreibung

Die vorliegende Erfindung bezieht sich auf Analysevorrichtungen zur Analyse von Thermoformprozessen in einer Thermoform-Laminiervorrichtung und auf das entsprechende mittels dieser Analysevorrichtung ausführbare Analyseverfahren.

Das Laminieren oder Beschichten von Werkstücken zur Veredelung von deren Oberfläche wird in Laminierautomaten ausgeführt, die als Vakuumpressen oder Membranvakuumpressen ausgeführt sein können. Der bekannte Laminierprozess folgt dabei einem Ablauf, in dem zunächst das Werkstück auf einem Legetisch platziert und die zur Beschichtung vorgesehene Folie über dem Werkstück angeordnet wird. Die thermisch verformbaren Folien werden nun als Schicht auf den häufig auch strukturierten Werkstücken aufgebracht, indem das Werkstück mit der darüber angeordneten Folie durch Einbringen des Legetischs in eine evakuierbare Kammer der Laminierpresse gebracht wird. Die über der Folie angeordnete Heizplatte stellt die Erweichungstemperatur der Folie bereit.

Alternative Pressensysteme sehen vor, dass zwischen der Folie und der Heizplatte eine Membran angeordnet ist, so dass durch Evakuieren der entsprechenden Kammer Folie und Membrane in Richtung Werkstück absinkt. Dabei wird die Folie erwärmt, dort zum Erweichen gebracht und bei nachfolgendem Druckaufbau über das zu laminierende Werkstück, mit Unterstützung eines Vakuums von der Tischseite aus, angesaugt wird, während sie die gewünschte Erweichungstemperatur noch aufweist. Die Membran und die Folie haften nicht aneinander, so kann die Membran von der an das Werkstück geformten Folie durch Anheben beabstandet werden.

Alternativ dazu erfolgt die Temperierung der Folie bei membranlosen Pressen durch das Ansaugen der Folie an die Heizplatte. Nach der Aufwärmzeit, bei der die Folie erweicht, erfolgt durch Druck und Vakuum die Verformung der Folie auf das zu laminierende Werkstück. Durch den Wärmeübertrag von der Folie auf das beleimte Werkstück wird der Kleber aktiviert. Dabei sinkt die Temperatur und das Werkstück samt der darauf festgelegten Folie beginnt abzukühlen. Der Abkühlungsprozess wird mit dem vollständigen Erstarren der Folie abgeschlossen.

Um Werkstücke wie Türblätter oder Bilderrahmen fachgerecht zu umkanten, können die zu laminierenden Werkstücke mittels Auflegepins oder entsprechend gestalteten Unterlegteilen von der Legefläche des Legetischs beabstandet werden, damit erreicht wird, dass beim Ansaugen der Folie auf das Werkstück diese die Kanten sauber und vollständig umgreift.

Der Verfahrensablauf kann durch geeignete Temperaturführung und entsprechende Anordnung der Werkstücke auf dem Legetisch optimiert werden, auch die angelegten Drücke in der evakuierbaren Kammer sind steuerbar und beeinflussen das Laminierergebnis. Weitere Parameter wie etwa die Luftfeuchtigkeit in der Vakuumkammer beeinflussen das Laminier-Resultat.

Eine Vielzahl der laminierten, respektive beschichteten Werkstücke weist unmittelbar nach dem Herstellungsprozess oder nach einiger Nutzung Beschädigungen auf, oder neigt dazu, an den kritischen Abschnitten wie Umkantungen oder komplexeren Strukturen z. B. mit Vertiefungen im Werkstück schadhaft zu sein. Es kommt vor, dass die Folienqualität nicht ausreichend ist und dass sie daher bei geringfügiger Belastung reißt, bricht oder sich unzureichend ausformt. Dies geschieht häufig gerade bei Ecken; fehlerhafte Umkantungen lösen sich.

Gemäß EP 374 735 A2 weist eine Thermoformvorrichtung ein Druckgehäuse auf, an dem eine Kamera indirekt angeordnet ist. Eine Bildaufnahme der Verformung der Folie in dem Druckgehäuse ist nur durch ein Fenster möglich, durch das Licht von einer Lichtquelle kommend mittels eines Spiegels, ebenfalls außerhalb der Form, in die Pressenform eingekoppelt wird. Das Licht wird an der Oberfläche der umzuformenden Folie reflektiert und durch einen Lichtleitkanal in eine Videokamera eingekoppelt. Eine direkte Beobachtung des Umformvorgangs ist mit dieser Vorrichtung nicht möglich.

Daher ist es wünschenswert, eine Vorrichtung und ein Verfahren bereitzustellen, die es ermöglichen, dass der Laminierprozess unmittelbar während seines Ablaufs analysiert und potentielle Schwachstellen des Verfahrens aufgedeckt werden können.

Die Analysevorrichtung mit den Merkmalen des Anspruchs 1 löst die Aufgabe, eine *in-situ*-Analysevorrichtung zur Analyse von Thermoformprozessen in einer Thermoform-Laminiervorrichtung bereitzustellen.

Die Aufgabe, ein Analyseverfahren zur Untersuchung von Thermoformprozessen in einer Thermoform-Laminiervorrichtung *in-situ* bereitzustellen, wird mittels des Verfahrens mit den Merkmalen des Anspruchs 14 offenbart.

Weiterbildungen der Vorrichtung und des Verfahrens werden in den jeweiligen Unteransprüchen aufgezeigt.

Eine Ausführungsform der erfindungsgemäßen Analysevorrichtung, die zur Analyse von Thermoformprozessen unmittelbar in einer Thermoform-Laminiervorrichtung geeignet ist, umfasst ein Druckgehäuse, das einem Druck von bis zu 5 bar standhält. Sämtliche in der Analysevorrichtung vorliegenden Analysekomponenten sind darüber hinaus vorteilhaft bis zu 80 °C, mindestens jedoch bis zu 50 °C temperaturbeständig.

Die Analysevorrichtung umfasst eine Bildaufnahmevorrichtung und eine Beleuchtungsvorrichtung. Die Bildaufnahmevorrichtung ist mit einer Datenspeichervorrichtung verbunden und ihr Objektiv ist in unmittelbarer Nachbarschaft zur Lichtaustrittsöffnung der Beleuchtungsvorrichtung angeordnet. Damit ist es vorteilhaft möglich, die Analysevorrichtung während der Durchführung eines Thermoformprozesses in der Thermoform-Laminiervorrichtung neben, in oder an einem Werkstück anzuordnen, das der Laminierung unterzogen wird. Bei der Bildaufnahmevorrichtung kann es sich um eine Kamera wie eine Digitalkamera handeln, die zur Einzelbildaufnahme geeignet sein kann, geeigneter Weise jedoch eher einen Film vom Ablauf des Laminierprozesses aufzeichnen wird.

Damit ist es möglich, das Verhalten und die Anordnung der zur Beschichtung vorgesehenen Folie während des Laminierprozesses zu beobachten und ihr Verhalten, beginnend von der Erweichung bis zum abschließenden Absenken und Ansaugen auf dem Werkstück zu verfolgen. Bei einer vorteilhaften Kameraauflösung von wenigstens 640x480 Pixel lassen sich so Bilder vom Thermoformvorgang gewinnen, die unmittelbar Aufschluss über den Ablauf des Prozesses und damit über fehlerhafte Abläufe geben.

Wenn in einer weiteren Ausführungsform die Kamera mit einem schwenkbaren Objektiv ausgestattet ist, so kann der Laminierprozess an unterschiedlichen Stellen des Werkstücks nachvollzogen werden.

Weiter ist es vorteilhaft, wenn die Analysevorrichtung mit akustischen Signalaufnehmern wie einem Mikrofon ausgestattet ist, da der unter erheblichen Druckänderungen ablaufende Thermoformprozess, der auch das Evakuieren und das anschließende absenken Lassen der Folie auf das Werkstück umfasst, mit einer Vielzahl von Geräuschen verbunden ist, die sich durch die Luftabsaugung beziehungsweise Luftzufuhr ergeben. Die akustische Analyse ergibt somit die Möglichkeit, auch fehlerhafte Druckverläufe aufzudecken.

Um die Analysevorrichtung hinsichtlich der aufzunehmenden Messparameter weiter zu optimieren, kann eine Temperaturaufzeichnungsvorrichtung, eine Druckmess- und/oder eine Feuchtigkeitsmessvorrichtung in dem Gehäuse angeordnet werden. Insbesondere Temperaturaufzeichnungsvorrichtungen, die bekannte Temperatursensoren oder Datenlogger umfassen können, ermöglichen, dass das Gehäuse, das die Komponenten der Analysevorrichtung beherbergt, an seiner Oberseite und/oder an Seitenwänden mit Temperaturmessfühlern ausgestattet sein kann. Damit ist es vorteilhaft möglich, die herrschenden Temperaturen an unterschiedlichen Stellen einerseits im Raum und andererseits an der Unterseite der Beschichtungsfolie, an der Membran, falls die Vorrichtung eine Membranthermoformpresse ist, oder an Kanten, wie sie auch am Werkstück vorliegen, zu untersuchen.

Vorteilhaft werden die aufgenommenen Bilder und die weiteren Messdaten mit Hilfe einer Datenspeichervorrichtung gespeichert. Die Übertragung an derartige Speichervorrichtungen, die beispielsweise als Sichere Digitale Speicherkarte (SD-Speicherkarte) ausgestaltet sein kann, kann dabei mittels Datenübertragungsleitungen oder über kabellose Übertragungstechnologien erfolgen.

Weiter ist es möglich, die im Datenspeicher gespeicherten optischen, akustischen, Temperatur-, Feuchtigkeits- und Drucksignale nach Ablauf des Thermoformverfahrens auszulesen und zu verwerten, beispielsweise indem die physikalischen Parameter graphisch aufgetragen und das Filmmaterial aufgearbeitet wird.

Ferner ist es möglich, insbesondere bei drahtlosen Datenübertragungsvorrichtungen, dass die aufgenommenen Daten unmittelbar *in-situ* an eine außerhalb der Analysevorrichtung angeordnete Datenverarbeitungseinheit übertragen werden. Damit ist es möglich, die Daten unmittelbar während ihrer Entstehung auf einen Bildschirm zu übertragen und zu verwerten. Dies ermöglicht auch die unmittelbare Beeinflussung von für den Thermoformprozess relevanten Parametern und damit deren unmittelbarer Einfluss auf das Laminierverfahren.

Das erfindungsgemäße Analyseverfahren, das eine Analysevorrichtung mit wenigstens einer Bildaufnahme- und einer Beleuchtungsvorrichtung umfasst, wobei die Bildaufnahmevorrichtung mit einer Datenspeichervorrichtung in Verbindung steht, sieht vor, dass das zu laminierende Werkstück auf einem Legetisch einer Thermoform-Laminiervorrichtung angeordnet wird, ehe die Laminierfolie über dem Werkstück platziert wird. Die Analysevorrichtung wird auf dem Legetisch in unmittelbarer Nähe zu dem zu laminierenden Werkstück auf der Laminierfolie oder darunter, neben dem Werkstück oder in einem Abschnitt des Werkstücks, wenn dieses beispielsweise ein Bilderrahmen ist, angeordnet. Nun wird der Laminiervorgang gestartet, wobei der Legetisch entsprechend der Temperatur und Druckbeaufschlagung unterzogen wird. Dies erfordert, wie der Fachmann weiß, das Einbringen des Legetischs in die evakuierbare Kammer und das entsprechende Abdichten derselben.

Zugleich oder unmittelbar zuvor wird der Analysevorgang gestartet, indem die Bildaufnahmevorrichtung und die Beleuchtungsvorrichtung angeschaltet werden. Die Aufnahme der Daten beginnt. Damit die Daten von einem gewünschten Abschnitt des Werkstücks aufgenommen werden, sind sowohl das Objektiv der Bildaufnahmevorrichtung, respektive der Kamera oder Digitalkamera, sowie das Licht, das aus der Lichtaustrittsöffnung der Beleuchtungsvorrichtung tritt, auf den zu analysierenden Werkstückabschnitt gerichtet. Mit der Beendigung des Laminiervorgangs kann auch der Analysevorgang durch Abschalten der Bildaufnahme und der Beleuchtungsvorrichtung beendet werden. Mit Hilfe von entsprechenden Timern können der Laminier- und der Analysevorgang zeitlich aufeinander abgestimmt werden. Nachdem der Analysevorgang abgeschlossen ist oder bereits während des noch laufenden Analysevorgangs, können abhängig von der verwendeten Analysevorrichtung die mit der Datenspeichervorrichtung gespeicherten Daten ausgelesen und interpretiert werden. Insbesondere die Verwendung von funkbasierten Übertragungstechnologien ermöglicht die *in-situ*-Analyse.

Ferner kann der Analysevorgang auch das in Betrieb Setzen weiterer Messvorrichtungen umfassen, die in unterschiedlichen Ausführungsformen der Analysevorrichtung vorgesehen sein können; diese umfassen Vorrichtungen zur Aufnahme akustischer Signale, Temperaturaufzeichnungs-, Druckmess- und Feuchtigkeitsmessvorrichtungen.

Diese und weitere Vorteile werden durch die nachfolgende Beschreibung unter Bezug auf die begleitenden Figuren ausgeführt.

Der Bezug auf die Figuren in der Beschreibung dient der Unterstützung der Beschreibung und dem erleichternden Verständnis des Gegenstands. Gegenstände oder Teile von Gegenständen die im Wesentlichen gleich oder ähnlich sind, können mit denselben Bezugszeichen versehen sein. Die Figuren sind lediglich schematische Darstellungen von Ausführungsbeispielen der Erfindung. Es zeigt:

**Fig. 1** eine Draufsicht auf eine schematisch gezeigte Analysevorrichtung,

**Fig. 2** eine Vakuumthermoformpresse, auf deren Legetisch eine erfindungsgemäße Analysevorrichtung neben einem Werkstück angeordnet ist,

**Fig. 3** eine schematische Seitenansicht einer in einer Thermoformpresse neben einem Werkstück angeordneten Analysevorrichtung,

**Fig. 4a** eine in einer Thermoformpresse in einem als Rahmen gestalteten Werkstück angeordneten Analysevorrichtung,

**Fig. 4b** eine Draufsicht auf ein rahmenförmiges Werkstück, in dessen Ausnehmung die Analysevorrichtung platziert ist,

**Fig. 5** ein Temperaturprofil, das während des Thermoformpressvorgangs aufgenommen wurde.

Grundsätzlich sind die Ausführungsformen der erfindungsgemäßen Analysevorrichtung geeignet, in verschiedene Thermoformpressen während der Ausführung des Pressvorgangs eingebracht zu werden. Abhängig von den in diesen Presswerkzeugen auftretenden Drücken, die üblicherweise 5 bar nicht überschreiten, und den Temperaturen, die notwendig sind, um die auf die Werkstücke aufzubringenden Folien zu erweichen, und die im Wesentlichen 80 °C nicht überschreiten, sind die Gehäuse der Analysevorrichtung entsprechend druck- und temperaturresistent geschaffen. Die Gehäuse umfassen im Wesentlichen einen stabilen Kunststoffrahmen vorzugsweise aus einem Duroplasten, der mit einem Boden und einem Deckel versehen ist. Wenn eine erfindungsgemäße Analysevorrichtung lediglich mit einer Bildaufnahmevorrichtung arbeitet, so genügt es, wenn dafür im Rahmen eine entsprechende Öffnung gelassen wird, die benachbart zu einer entsprechenden Beleuchtungsvorrichtung vorliegen wird. Für den Lichtaustritt ist ebenfalls eine Öffnung im Seitenrahmen vorzusehen.

Damit ist es möglich, dass der Raum in der Thermoformpresse während der Ausführung des Pressvorgangs soweit erhellt wird, dass die Bildaufnahmevorrichtung, bei der es sich um eine gewöhnliche Kamera zur Aufnahme von Stand- oder Laufbildern oder um eine Digitalkamera handeln kann, hinreichend beleuchtet ist. Das Objektiv der Bildaufnahmevorrichtung ist dazu geeigneter Weise benachbart zu der Lichtaustrittsöffnung angeordnet. Vorteilhaft kann das Objektiv der Kamera auch schwenkbar sein, so dass unterschiedliche Abschnitte des Werkstücks aufgenommen werden können. Geeignete Digitalkameras weisen eine Auflösung von wenigstens 640x480 Pixel auf.

Ferner sind gängige, auf dem Markt erhältliche Digitalkameras vielfach vorteilhaft bereits mit Vorrichtungen zur Aufnahme akustischer Signale, respektive mit Mikrofonen, ausgestattet. Dies ermöglicht, dass der Verlauf des Evakuierprozesses, der in einer solchen Thermoformpresse abläuft, akustisch mitverfolgt werden kann. Eventuelle Undichtigkeiten, die zu entsprechenden Luft-Pfeifgeräuschen führen, werden daher begleitend zum Bildmaterial aufgenommen und verdeutlichen den Gesamtablauf des Verfahrens und Fehlerquellen.

Zudem kann in der erfindungsgemäßen Analysevorrichtung eine Temperaturmessvorrichtung vorgesehen sein.

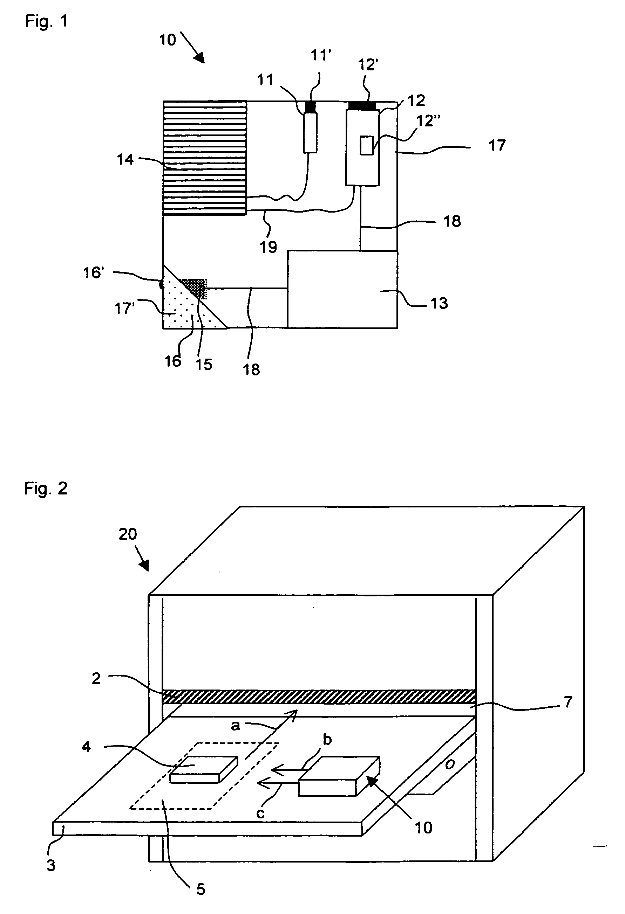

**Fig. 1** zeigt schematisch eine Analysevorrichtung 10, in deren Gehäuse 17 eine Kamera 12 mit einem Objektiv 12' neben der Beleuchtungsvorrichtung 11 mit einer entsprechenden Lichtaustrittsöffnung 11' angeordnet ist. Bei einer derartigen Beleuchtungsvorrichtung kann es sich um eine LED handeln, die wenig Energie verbraucht, gute Lichtqualität bereitstellt und die zudem kaum einen messbaren Eigenenergiebeitrag in das Verfahren einträgt und somit keine nachteilige Temperaturerhöhung in der Umgebung der Analysevorrichtung bewirkt. Um dies zu gewährleisten, muss in diesem Bereich das Gehäuse 17 aus einem transparenten Material gestaltet sein.

Schließlich ist eine Temperaturaufzeichnungsvorrichtung 15 in dem Gehäuse 17 angeordnet. Diese weist zwei Messfühler 16,16' auf, wobei der Messfühler 16' an einer Seitenwand angeordnet ist, während der Messfühler 16 quasi am Deckel des Gehäuses 17 positioniert ist. Dies ist besonders vorteilhaft, da damit der Temperaturverlauf an der Oberseite des Gehäuses 17 und an seiner Seite aufgenommen werden kann, der einem Temperaturverlauf am Werkstück 4, das auch eine Oberseiten und Seitenabschnitten aufweist, entsprechen wird.

Da die Analysevorrichtung 10 mit der Kamera 12 auf der Laminierfolie oder unter der Laminierfolie angeordnet werden kann, ist es möglich, auch den Temperaturverlauf an der Unterseite der Laminierfolie zu verfolgen. Um keine Messfehler durch den aufheizenden Rahmen zu erhalten, aus dem das Gehäuse 17 beschaffen ist, ist der Abschnitt 17', in den die Temperaturmessfühler 16',16 integriert sind, austauschbar gestaltet. **Fig. 1** zeigt eine austauschbare Ecke 17' des Gehäuses 17, das eine dreieckige Grundfläche aufweist.

Vorliegend ist gezeigt, dass die Kamera 12 und die Temperaturmessfühler 16',16 über die Temperaturaufzeichnungsvorrichtung 15 mit der Datenaufnahmevorrichtung 13, die im Gehäuse 17 angeordnet ist, über Datenleitungen 18 verbunden sind. Vorteilhaft ist die Temperaturaufzeichnungsvorrichtung 15 in die Datenaufnahmevorrichtung 13 integriert. Die Energiezufuhr der LED 11 und der Kamera 12 erfolgt über Energieversorgungsleitungen 19 von einem Akku 14. Alternativ könnte auch ein Netzanschluss vorgesehen sein, oder die einzelnen Geräte könnten mit geeigneten Batterien ausgestattet sein.

Die in **Fig. 1** gezeigte Ausführungsform sieht als Datenspeichermedium eine SD-Karte vor, so dass die auf der Karte gespeicherten Daten, die optische, akustische und Temperaturdaten umfassen, nach Abschluss des A-nalyseverfahrens mit einem entsprechenden Kartenleser ausgelesen und mit einem Datenverarbeitungsmedium, wie es dem Fachmann bekannt ist, weiterverarbeitet werden. Selbstverständlich kann die Datenübertragung auch über kabellose Verbindungen, beispielsweise über Funk, von der Datenspeichervorrichtung, die im Übrigen keine SD-Karte sein muss, sondern auch eine andere geeignete Speichervorrichtung sein kann, zu dem Datenverarbeitungsmedium erfolgen. Die Analysedaten können mittels der Funkdatenübertragung vorteilhaft schon während des Laminierprozesses zur Auswertung an das Datenverarbeitungsmedium ausgegeben werden, so dass auf den Laminierprozess Einfluss genommen werden könnte, sollte dies erforderlich sein.

Gezeigt ist in **Fig. 1** eine Temperaturaufzeichnungsvorrichtung 15 mit den zwei Temperatursensoren 16',16 und die mit einem Mikrofon 12" ausgestattete Kamera 12; weiter können Sensoren wie Feuchtigkeits-, Druck- und anderen Sensoren, die ebenfalls im Gehäuse 17 untergebracht sein können, vorgesehen sein.

Derartige Temperatur-, Feuchtigkeits- oder Drucksensoren können als Temperaturlogger ausgestattet sein, so dass sie über eine eigene Speichervorrichtung verfügen und überdies hinsichtlich ihrer energetischen Versorgung autark sind. Wie in **Fig. 1** gezeigt, kann die Energieversorgung mittels eines Akkus 14 erfolgen, der über die Energieversorgungsleitungen 19 mit den Verbrauchern verbunden ist.

**Fig. 2** zeigt eine Thermoformpresse 20, die als Laminiervorrichtung dient. Auf dem Legetisch 3 wird die Analysevorrichtung 10 neben dem Werkstück 4 positioniert, das vorliegend mit der Laminierfolie 5 bedeckt ist. Pfeil a zeigt die Bewegungsrichtung des Legetischs 3, wenn er in die Presse 20 eingefahren wird, Pfeil b zeigt die Richtung des aus der Austrittsöffnung der Beleuchtungsvorrichtung austretenden Lichts und Pfeil c zeigt die Orientierung des Objektivs der Kamera an. Die so zueinander angeordneten Objekte werden nunmehr in die Laminiervorrichtung eingebracht, indem vorliegend der Legetisch 3, der verschiebbar gelagert ist, in den Pressenraum 7 verfahren wird. Der den Pressenraum 7 nach Positionierung des Legetischs 3 abdichtende Dichtrahmen 2 ist in einer angehobenen Position dargestellt, aus der er sich zum Start des Laminierprozesses auf den Legetisch 3 absenkt.

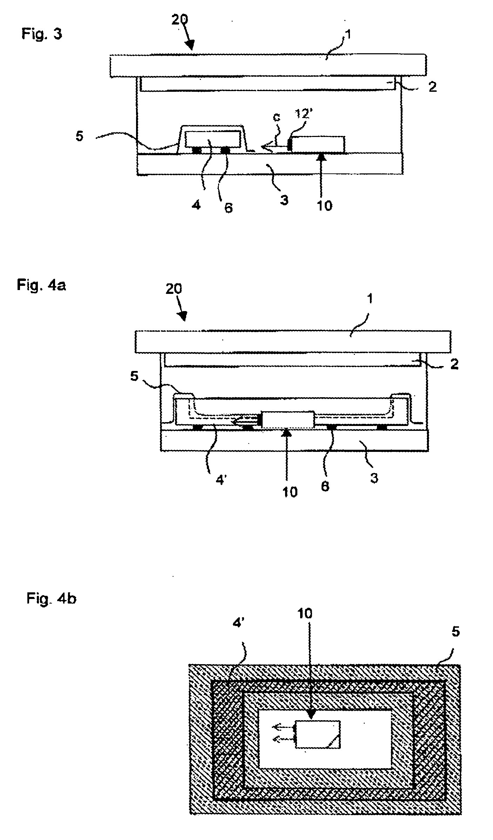

**Fig. 3** zeigt eine Ansicht eines auf einem Laminiertisch 3 platzierten Werkstücks 4, das, um eine optimale Kantenumrandung mittels der Laminierfolie 5 zu gewährleisten, auf Legepins 6 gelagert ist. Die Folie 5 ist locker über dem Werkstück 4 platziert und die Analysevorrichtung 10 mit entsprechend ausgerichtetem Objektiv 12' (s. Pfeil c) zeigt in Richtung des Werkstücks 4. Wenn der Laminiervorgang begonnen werden soll, wird nunmehr die Laminiervorrichtung 20 geschlossen, indem die Heizplatte 1 samt dem Dichtrahmen 2 über den Legetisch 3 abgesenkt werden. Sobald der Rahmen 2 geschlossen ist, kann der Laminiervorgang beginnen und die Druckkammer evakuiert werden. Die Folie 5, die über dem Werkstück 4 liegt, kann nun zum Aufheizen an eine Membran (nicht dargestellt) oder unmittelbar an die Heizplatte 1 angesaugt und zum Erweichen gebracht werden. Nach Erreichen der gewünschten Erweichungstemperatur kann eine Druckumkehr erfolgen, wodurch die erweichte Folie 5, die nicht an der Heizplatte 1 anhaftet, auf das Werkstück 4 abgesenkt und dort entsprechend angesaugt und ausgeformt wird. Bei Verwendung einer Membran senkt sich eine Kombination aus Folie und Membran über das Werkstück, wo die Beschichtung durch adhäsives Verbinden der Folie mit der Werkstückoberfläche erfolgt, während kein Anhaften der erweichten Folie an der Membran stattfindet.

Wie **Fig. 4a** zeigt, ist es auch möglich, die Analysevorrichtung 10 innerhalb eines Werkstücks, beispielsweise eines Rahmens 4', anzuordnen. Die Analysevorrichtung 10 kann dann auf der Folie 5 oder, wie **Fig. 4b** zeigt, in einem ausgeschnittenen Folienbereich platziert werden. Damit kann die Analysevorrichtung 10 insbesondere Vorgänge aufzeigen, die die Umkantung sensibler Werkstückteile wie Rahmen 4' betreffen.

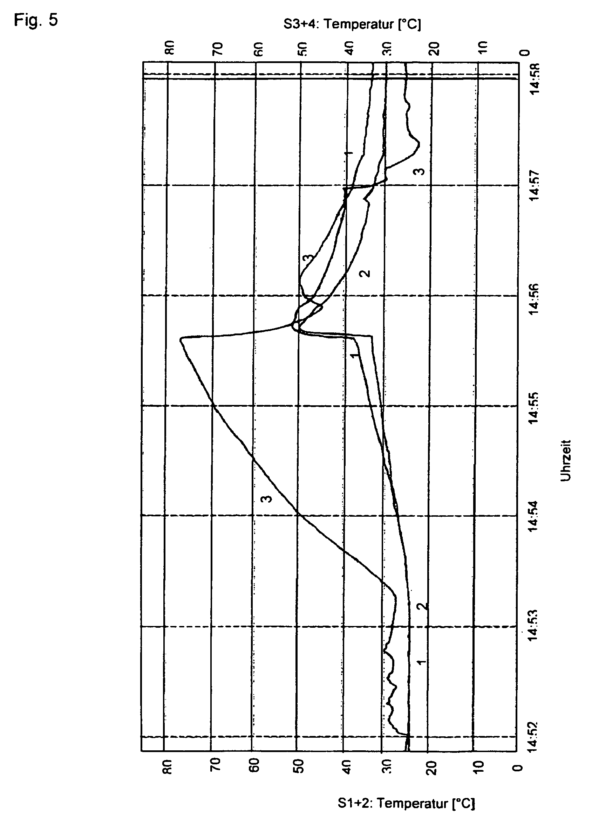

Wie **Fig. 5** zeigt, ist es möglich, mit der erfindungsgemäßen Vorrichtung zugleich die Temperaturverläufe an der Unterseite der Folie (s. Kurve 3) und an der Oberseite des Werkstücks (s. Kurve 1) sowie an den Seitenkanten (s. Kurve 2) verfolgen. Wie die in **Fig. 5** gezeigten Temperaturprofile verdeutlicht, kommt es in der Mitte des Laminierzyklus an der Unterseite der Folie nach starkem Aufheizen zu einem erheblichen Temperaturabfall, was daher rührt, dass die Folie zum Zeitpunkt ihrer Ansaugung an die Heizplatte am heißesten wird, und unmittelbar mit dem Ablassen auf das Werkstück mit dem Abkühlen beginnt. Dies wird von den Temperaturverläufen am Werkstück widergespiegelt: mit dem Absenken der heißen Folie auf das Werkstück steigt dort die Temperatur sprunghaft an.

Die erfindungsgemäße Vorrichtung ermöglicht *in- situ* den Verfahrensablauf der Laminierung mitzuverfolgen oder zumindest nach Ablauf des Laminiervorgangs die entsprechenden Daten aus den eingesetzten Datenspeichervorrichtungen auszulesen und zu interpretieren. Durch die Verwendung einer Digitalkamera kann dabei auf einfachste Weise verdeutlicht werden, wo unvollständiges Laminieren erfolgt. Dieser optisch erfasste Prozessablauf kann mit den übrigen Parametern, wie Temperatur, Druck, Feuchtigkeit und akustische Aufnahmen zusammen ausgewertet werden, so dass Ursachen für ein fehlerhaftes oder unvollständiges Laminierverhalten beziehungsweise Laminierergebnis auf leichter verfolgt werden kann und die Prozessparameter dann entsprechend verändert werden können. Somit ist es möglich, die Thermoformpressen, mit oder ohne Membran, zu verbessern und die entsprechenden Prozessparameter zielgerichtet zu optimieren.

### BEZUGSZEICHENLISTE

| | |
|---|---|
| 1 | Heizplatte |
| 2 | Dichtrahmen |
| 3 | Legetisch |
| 4, 4' | Werkstück |
| 5 | Folie |
| 6 | Legepins |
| 7 | Presseneinschub |
| 10 | Analysevorrichtung |
| 11 | Beleuchtungsvorrichtung |
| 11' | Lichtaustrittsöffnung |
| 12 | Bildaufnahmevorrichtung |
| 12' | Objektiv |
| 12" | Mikrofon |
| 13 | Datenspeichervorrichtung |
| 14 | Akku |
| 15 | Temperaturaufzeichnungsvorrichtung |
| 16, 16' | Messfühler |
| 17 | Gehäuse |
| 17' | austauschbarer Abschnitt |
| 18 | Datenübertragungsleitung |
| 19 | Energieversorgungsleitung |
| 20 | Thermoform-Laminiervorrichtung |

## Patentansprüche

1. Analysevorrichtung (10) zur Analyse eines Thermoformprozesses in einer Thermoform-Laminiervorrichtung (20),
**dadurch gekennzeichnet, dass**
die Analysevorrichtung (10) in der Thermoform-Laminiervorrichtung angeordnet ist und ein Druckgehäuse (17) mit einer Druckresistenz bis zu 5 bar umfasst, in dem zumindest eine mit einer Datenspeichervorrichtung (13) in Verbindung stehende Bildaufnahmevorrichtung (12) und eine Beleuchtungsvorrichtung (11) angeordnet sind,
wobei ein Objektiv (12') der Bildaufnahmevorrichtung (12) benachbart zu einer Lichtaustrittsöffnung (11') der Beleuchtungsvorrichtung (11) an einer Gehäusewand des Gehäuses (17) angeordnet ist, und
wobei die Analysevorrichtung (10) eine Temperaturbeständigkeit wenigstens bis zu 50 °C aufweist.

2. Analysevorrichtung (10) nach Anspruch 1, **dadurch gekennzeichnet, dass** die Bildaufnahmevorrichtung (12) eine Kamera, insbesondere eine Digitalkamera, zur Aufnahme von Einzelbildern und/oder zur Aufnahme von Bildfolgen ist.

3. Analysevorrichtung (10) nach Anspruch 1 oder 2, **dadurch gekennzeichnet, dass** das Objektiv (12') der Kamera schwenkbar ist.

4. Analysevorrichtung (10) nach Anspruch 2, **dadurch gekennzeichnet, dass** die Digitalkamera eine Auflösung von wenigstens 640x480 Pixel aufweist.

5. Analysevorrichtung (10) nach zumindest einem der Ansprüche 1 bis 4,
**dadurch gekennzeichnet, dass** in dem Gehäuse (17) der Analysevorrichtung (10) eine Vorrichtung zur Aufnahme akustischer Signale angeordnet ist, insbesondere ein in die Bildaufnahmevorrichtung (12) integriertes Mikrofon (12"), das mit der Datenspeichervorrichtung (13) in Verbindung steht.

6. Analysevorrichtung (10) nach zumindest einem der Ansprüche 1 bis 5,
**dadurch gekennzeichnet, dass** die Beleuchtungsvorrichtung (11) eine LED ist.

7. Analysevorrichtung (10) nach zumindest einem der Ansprüche 1 bis 6,
**dadurch gekennzeichnet, dass** in dem Gehäuse (17) der Analysevorrichtung (10) zumindest eine Temperaturaufzeichnungsvorrichtung (15) angeordnet ist, die zumindest einen in die Gehäusewand integrierten Messfühler (16,16') umfasst, wobei der Messfühler (16,16') geeignet ist, eine außerhalb des Gehäuses (17) herrschende Temperatur zu messen.

8. Analysevorrichtung (10) nach Anspruch 7, **dadurch gekennzeichnet, dass** die Temperaturaufzeichnungsvorrichtung (15) ein
- mit der Datenspeichervorrichtung (13) in Verbindung stehender Temperatursensor, oder
- ein Temperatur-Datenlogger ist.

9. Analysevorrichtung (10) nach zumindest einem der Ansprüche 1 bis 8,
**dadurch gekennzeichnet, dass** in dem Gehäuse (17) der Analysevorrichtung (10) zumindest eine Druckmessvorrichtung und/oder eine Feuchtigkeitsmessvorrichtung insbesondere ein
- mit der Datenspeichervorrichtung (13) in Verbindung stehender Drucksensor und/oder mit der Datenspeichervorrichtung (13) in Verbindung stehender Feuchtigkeitssensor und/oder
- ein Druck- und/oder ein Feuchtigkeitsdatenlogger
angeordnet ist.

10. Analysevorrichtung (10) nach zumindest einem der Ansprüche 1 bis 9, **dadurch gekennzeichnet, dass** eine Verbindung mit der Datenspeichervorrichtung (13) durch
- Datenübertragungsleitungen (18) oder
- drahtlose Datenübertragungsvorrichtungen, insbesondere über Funkwellen,
bereitgestellt wird.

11. Analysevorrichtung (10) nach zumindest einem der Ansprüche 1 bis 10, **dadurch gekennzeichnet, dass** die Datenspeichervorrichtung (13) eine Speicherkarte, insbesondere eine Sichere Digitale Speicherkarte ist.

12. Analysevorrichtung (10) nach zumindest einem der Ansprüche 1 bis 11, **dadurch gekennzeichnet, dass** das Gehäuse (17) eine Box mit einem austauschbaren Abschnitt (17') ist, wobei der austauschbare Abschnitt (17') in einem Bereich vorliegt, in dem der zumindest eine Messfühler (16,16') der Temperaturaufzeichnungsvorrichtung (15) angeordnet ist.

13. Analysevorrichtung (10) nach zumindest einem der Ansprüche 1 bis 12, **dadurch gekennzeichnet, dass** eine Energieversorgung von Energie verbrauchenden Komponenten in der Analysevorrichtung (10) über eine Energiequelle umfassend einen Netzversorgungsanschluss, zumindest einen in dem Gehäuse (17) vorliegenden Akku (14) oder zumindest eine in dem Gehäuse (17) vorliegende Batterie bereitgestellt wird,
wobei die Energiequelle unmittelbar in dem Verbraucher angeordnet oder über Versorgungsleitungen (19) mit dem Verbraucher verbunden ist.

14. Verfahren zur Analyse eines Thermoformprozesses in einer Thermoform-Laminiervorrichtung (20) unter Verwendung einer Analysevorrichtung (10) nach zumindest einem der Ansprüche Anspruch 1 bis 13, **umfassend die Schritte des**
- Anordnens eines zu laminierenden Werkstück (4) auf einem Legetisch (3) einer Thermoform-Laminiervorrichtung (20),
- Platzierens einer Laminierfolie (5) über dem Werkstück (4),
- Anordnens der optischen Analysevorrichtung (10) auf dem Legetisch (3) in der Thermoform-Laminiervorrichtung nahe dem zu laminierenden Werkstück (4),
- Startens des Laminiervorgangs, wobei die auf dem Legetisch (3) angeordneten Objekte einer Temperatur- und Druckbeaufschlagung unterzogen werden, und gleichzeitig des
- Startens des Analysevorgangs, indem zumindest die Bildaufnahmevorrichtung (12), die Datenspeichervorrichtung (13) und die Beleuchtungsvorrichtung (11) in Betrieb genommen werden, wobei das Objektiv (12') der Bildaufnahmevorrichtung (12) und das aus der Lichtaustrittsöffnung (11') der Beleuchtungsvorrichtung (11) austretende Licht während des Laminiervorgangs auf das Werkstück (4) gerichtet sind,
- Beendens des Laminier- und des Analysevorgangs.

15. Verfahren nach Anspruch 14, **umfassend den Schritt des** Auslesens der mittels der Datenspeichervorrichtung (13) gespeicherten Daten.

16. Verfahren nach Anspruch 14 oder 15, **wobei** der Analysevorgang das in Betrieb Nehmen zumindest einer Messvorrichtung aus der Gruppe umfassend:
die Vorrichtung zur Aufnahme akustischer Signale, die Temperaturaufzeichnungsvorrichtung (15), die Druckmessvorrichtung, die Feuchtigkeitsmessvorrichtung, umfasst.

## Claims

1. An analysis device (10) for analyzing a thermoforming process in a thermoforming laminating device (20),
**characterized in that**
the analysis device (10) is disposed in the thermoforming laminating device and comprises a pressure housing (17) having a pressure resistance of up to 5 bar in which at least one image recording device (12) connected to a data storage device (13) and one lighting device (11) are disposed,
wherein a lens (12') of the image recording device (12) is disposed adjacent to a light outlet opening (11') of the lighting device (11) on a housing wall of the housing (17), and
wherein the analysis device (10) has a temperature resistance of at least up to 50 °C.

2. The analysis device (10) according to claim 1, **characterized in that** the image recording device (12) is a camera, in particular a digital camera, for recording single images and/or for recording image sequences.

3. The analysis device (10) according to claim 1 or claim 2, **characterized in that** the lens (12') of the camera is swivelable.

4. The analysis device (10) according to claim 2, **characterized in that** the digital camera has a resolution of at least 640x480 pixels.

5. The analysis device (10) according to at least one of the claims 1 to 4, **characterized in that** in the housing (17) of the analysis device (10), a device for recording acoustic signals is disposed, in particular a microphone (12") which is integrated in the image recording device (12) and is connected to the data storage device (13).

6. The analysis device (10) according to at least one of the claims 1 to 5, **characterized in that** the lighting device (11) is an LED.

7. The analysis device (10) according to at least one of the claims 1 to 6, **characterized in that** in the housing (17) of the analysis device (10) at least one temperature recording device (15) is disposed which comprises at least one sensor (16, 16') which is integrated in the housing wall, wherein the sensor (16, 16') is suitable for measuring a prevailing temperature outside of the housing (17).

8. The analysis device (10) according to claim 7, **characterized in that** the temperature recording device (15) is a
- temperature sensor connected to the data storage device (13), or
- a temperature data logger.

9. The analysis device (10) according to at least one of the claims 1 to 8, **characterized in that** in the housing (17) of the analysis device (10) at least one pressure measuring device and/or one humidity measuring device, in particular a
- pressure sensor connected to the data storage device (13), and/or a humidity sensor connected to the data storage device (13), and/or
- a pressure data logger and/or a humidity data logger is disposed.

10. The analysis device (10) according to at least one of the claims 1 to 9, **characterized in that** a connection to the data storage device (13) is provided through
- data transfer lines (18) or
- wireless data transfer devices, in particular via radio waves.

11. The analysis device (10) according to at least one of the claims 1 to 10, **characterized in that** the data storage device (13) is a memory card, in particular a secure digital memory card.

12. The analysis device (10) according to at least one of the claims 1 to 11, **characterized in that** the housing (17) is a box having an exchangeable section (17'), wherein the exchangeable section (17') lies in a region in which the at least one sensor (16, 16') of the temperature recording device (15) is disposed.

13. The analysis device (10) according to at least one of the claims 1 to 12, **characterized in that** an energy supply for energy-consuming components in the analysis device (10) is provided via an energy source comprising a mains supply connection, at least one accumulator (14) situated in the housing (17), or at least one battery (17) situated in the housing (17),
wherein the energy source is disposed directly in the consumer or is connected via supply lines (19) to the consumer.

14. A method for analyzing a thermoforming process in a thermoforming laminating device (20) using an analysis device (10) according to at least one of the claims 1 to 13, **comprising the steps of**
- disposing a workpiece (4) to be laminated onto a laying table (3) of a thermoforming laminating device (20),
- placing a laminating film (5) above the workpiece,
- disposing the optical analysis device (10) onto the laying table (3) in a thermoforming laminating device close to the workpiece (4) to be laminated,
- starting the laminating process, wherein the objects disposed on the laying table (3) are subjected to a temperature and pressure application and, at the same time,
- starting the analyzing process in that at least the image recording device (12), the data storage device (13), and the lighting device (11) are put into operation, wherein the lens (12') of the image recording device (12) and the light coming out of the light outlet opening (11') of the lighting device (11) are directed at the workpiece (4) during the laminating process,
- completing the laminating process and the analyzing process.

15. The method according to claim **14, comprising the step of** reading out the data stored by means of the data storage device (13).

16. The method according to claim 14 or claim 15, **wherein** the analyzing process comprises putting into operation at least one measuring device from the group comprising:
the device for recording acoustic signals, the temperature recording device (15), the pressure measuring device, the humidity measuring device.

## Revendications

1. Dispositif d'analyse (10) pour l'analyse d'un processus de thermoformage dans un dispositif de thermoformage et de laminage (20),
**caractérisé en ce que**
le dispositif d'analyse (10) est disposé dans le dispositif de thermoformage et de laminage (20) et comprend un logement sous pression (17) avec une résistance à la pression allant jusqu'à 5 bar, dans lequel au moins un dispositif de prise de vues (12) connecté à un dispositif de mémorisation de données (13) et un dispositif d'éclairage (11) sont disposés,
dans lequel un objectif (12') du dispositif de prise de vues (12) est disposé de manière adjacente à une ouverture de sortie de lumière (11') du dispositif d'éclairage (11) au niveau d'une paroi de logement du logement (17), et
dans lequel le dispositif d'analyse (10) présente une résistance à la température allant au moins jusqu'à 50°C.

2. Dispositif d'analyse (10) selon la revendication 1, **caractérisé en ce que** le dispositif de prise de vues (12) est une caméra, en particulier une caméra numérique, pour la prise d'images individuelles et/ou la prise de séquences d'images.

3. Dispositif d'analyse (10) selon la revendication 1 ou 2, **caractérisé en ce que** l'objectif (12') de la caméra peut pivoter.

4. Dispositif d'analyse (10) selon la revendication 2, **caractérisé en ce que** la caméra numérique présente une résolution d'au moins 640 x 480 pixels.

5. Dispositif d'analyse (10) selon au moins l'une des revendications 1 à 4, **caractérisé en ce que** dans le logement (17) du dispositif d'analyse (10) est disposé un dispositif destiné à l'enregistrement de signaux acoustiques, en particulier un microphone (12") intégré dans le dispositif de prise de vues (12), lequel microphone est connecté au dispositif de mémorisation de données (13).

6. Dispositif d'analyse (10) selon au moins l'une des revendications 1 à 4, **caractérisé en ce que** le dispositif d'éclairage (11) est une LED.

7. Dispositif d'analyse (10) selon au moins l'une des revendications 1 à 6, **caractérisé en ce que** dans le logement (17) du dispositif d'analyse (10) est disposé un dispositif d'enregistrement de température (15), qui comprend au moins un capteur (16, 16') intégré dans la paroi de logement, dans lequel le capteur (16, 16') est approprié pour mesurer une température régnant à l'extérieur du logement (17).

8. Dispositif d'analyse (10) selon la revendication 7, **caractérisé en ce que** le dispositif d'enregistrement de température (15) est un
- détecteur de température connecté au dispositif de mémorisation de données (13), ou
- un enregistreur de données de température.

9. Dispositif d'analyse (10) selon au moins l'une des revendications 1 à 8, **caractérisé en ce que** dans le logement (17) du dispositif d'analyse (10) sont disposés au moins un dispositif de mesure de pression et/ou un dispositif de mesure d'humidité en particulier
- un détecteur de température connecté au dispositif de mémorisation de données (13) et/ou un détecteur d'humidité connecté au dispositif de mémorisation de données (13) et/ou
- un enregistreur de pression et/ou d'humidité.

10. Dispositif d'analyse (10) selon au moins l'une des revendications 1 à 9, **caractérisé en ce qu'**une connexion avec le dispositif de mémorisation de données (13) est mise à disposition par le biais
- de lignes de transmission de données (18) ou
- de dispositifs de transmission de données sans fil, en particulier via des ondes radioélectriques.

11. Dispositif d'analyse (10) selon au moins l'une des revendications 1 à 10, **caractérisé en ce que** le dispositif de mémorisation de données (13) est une carte mémoire, en particulier une carte mémoire numérique sécurisée.

12. Dispositif d'analyse (10) selon au moins l'une des revendications 1 à 11, **caractérisé en ce que** le logement (17) est un boîtier doté d'une partie remplaçable (17'), dans lequel la partie remplaçable (17') se trouve dans une zone où est disposé l'au moins un capteur (16, 16') du dispositif d'enregistrement de température (15).

13. Dispositif d'analyse (10) selon au moins l'une des revendications 1 à 12, **caractérisé en ce qu**'une alimentation en énergie de composants consommant de l'énergie dans le dispositif d'analyse (10) est mise à disposition par le biais d'une source d'énergie comprenant un raccordement au secteur, au moins un accumulateur (14) se trouvant dans le logement (17) ou au moins une batterie se trouvant dans le logement (17),
dans lequel la source d'énergie est disposée directement dans le consommateur d'énergie ou connectée au consommateur d'énergie via des lignes d'alimentation (19).

14. Procédé d'analyse d'un processus de thermoformage dans un dispositif de thermoformage et de laminage (20) utilisant un dispositif d'analyse (10) selon au moins l'une des revendications 1 à 13, **comprenant les étapes**
- disposer une pièce à laminer (4) sur une table de dépôt (3) d'un dispositif de thermoformage et de laminage (20),
- placer une feuille de laminage (5) sur la pièce (4),
- disposer le dispositif d'analyse optique (10) sur la table de dépôt (3) dans le dispositif de thermoformage et de laminage près de la pièce à laminer (4),
- démarrer le processus de laminage, dans lequel les objets disposés sur la table de dépôt (3) sont soumis à une charge de température et de pression, et simultanément
- démarrer le processus d'analyse en mettant en service au moins le dispositif de prise de vues (12), le dispositif de mémorisation de données (13) et le dispositif d'éclairage (11), dans lequel l'objectif (12') du dispositif de prise de vues (12) et la lumière sortant de l'ouverture de sortie de lumière (11') du dispositif d'éclairage (11) sont dirigés sur la pièce (4) pendant le processus de laminage,
- terminer le processus de laminage et d'analyse.

15. Dispositif selon la revendication 14, **comprenant les étapes consistant à** lire les données mémorisées au moyen du dispositif de mémorisation de données (13).

16. Dispositif selon la revendication 14 ou 15, **dans lequel** le processus d'analyse comprend la mise en service d'au moins un dispositif de mesure issu du groupe comprenant :
le dispositif d'enregistrement de signaux acoustiques, le dispositif d'enregistrement de température (15), le dispositif de mesure de pression, le dispositif de mesure d'humidité.
